# EUROPÄISCHE PATENTSCHRIFT

(11) **EP 0 615 927 B1**
(45) Veröffentlichungstag und Bekanntmachung des Hinweises auf die Patenterteilung: **04.06.1997**
(21) Anmeldenummer: 94103463.9
(22) Anmeldetag: 08.03.1994
(51) Int. Cl.: B65G 13/07, B65G 13/12, B65G 39/12

(54) **Rollenbahn mit durch einen Riementrieb angetriebenen Förderrollen**
Rollerway with rollers driven by a belt drive
Chemin à rouleaux équipé de rouleaux entraînés par une courroie d'entraînement

(30) Priorität: 18.03.1993 DE 9303984
(43) Veröffentlichungstag der Anmeldung: 21.09.1994
(73) Patentinhaber: HARO-FÖRDERELEMENTE HACKLÄNDER ROLLEN GmbH, D-42929 Wermelskirchen (DE)
(72) Erfinder: Hackländer, Michael, D-42929 Wermelskirchen (DE)
(74) Vertreter: Patentanwälte Dr. Solf & Zapf

(56) Entgegenhaltungen:
- CH-A- 321 225
- FR-A- 1 346 408
- FR-A- 2 291 925
- FR-A- 2 563 506
- FR-A- 2 635 509
- US-A- 4 238 029

## Beschreibung

Die vorliegende Erfindung betrifft eine Rollenbahn mit einer Mehrzahl von Förderrollen, die in Rollenbahn-Längsrichtung hintereinander drehbar angeordnet sind und durch einen umlaufenden Riemen antreibbar sind, dessen Antriebstrum sich in Rollenbahn-Längsrichtung erstreckt und bei Anlage an der Mantelfläche der Förderrollen stellenweise jeweils zwischen zwei einander benachbarten Förderrollen zwecks Vergrößerung des Umschlingungswinkels um ein als frei drehbare Rolle ausgebildetes Stützelement verlaufend geführt ist.

Eine ähnliche Rollenbahn mit einem Riemen, der jedoch bei Anlage an der Mantelfläche der Rollen stellenweise jeweils zwischen zwei einander benachbarten Rollen um ein an seiner Oberfläche gerundetes festes Stützelement verlaufend geführt ist, ist aus dem deutschen Gebrauchsmuster DE-U-89 04 162.3 bekannt: Das Stützelement besteht aus einem starr angeordneten Gleitstützteil, das aus Glas oder Keramik hergestellt ist und eine glatte Gleitoberfläche für den Riemen besitzt. Diese Ausbildung des Stützelementes hat sich bewährt. Jedoch hat es sich gezeigt, daß nach einer längeren Benutzung ein stärkerer Verschleiß des Treibriemens auftritt. Darüber hinaus sind die aus Glas oder Keramik hergestellten Stützelemente relativ teuer in der Herstellung und aufwendig in der Montage.

Aus der FR-A-2 291 925 ist ein Rollenförderer mit einem Antrieb bekannt, der eine Anzahl von parallel angeordneten Förderrollen aufweist, deren Rotationsachsen quer zur Förderrichtung angeordnet sind und die von unten durch ein System mit einem Reibantrieb angetrieben werden. Das Antriebssystem enthält eine Reihe von Druckrollen und eine weitere Einrichtung, um die Druckrollen relativ zu den Förderrollen zu heben und zu senken. Diese weitere Einrichtung umfaßt mindestens eine aufblasbare Röhre, die sich über mindestens einen Teil des Rollenförderers erstreckt und so angebracht ist, daß sie auf die Druckrollen wirkt und ihre Position bestimmt. Wenn die Druckrollen angehoben sind, werden die Förderrollen durch Reibschluß mittels eines endlosen Riemens angetrieben, welcher zwischen den Förder- und den Druckrollen verläuft. Die Druckrollen wirken so als frei drehbare Stützrollen und vergrößern den Umschlingungswinkel des Riemens für die Förderrollen. Seitlich der Transport- und Antriebsbahnen befinden sich zwei U-förmige Lagerleisten, deren U-Schenkel seitlich von den Bahnen weggerichtet sind. Im Basisteil der Lagerleisten befinden sich Ausnehmungen für die Drehachsen der Förderrollen und der Druckrollen. Ein solches, fest an den Förderrollen zu montierendes Antriebssystem ist nicht an in der Praxis oftmals variierende Gegebenheiten, wie z.B. verschiedene Transportsysteme mit unterschiedlichen Abständen der Förderrollen, anpaßbar.

Der vorliegenden Erfindung liegt die Aufgabe zugrunde, eine Rollenbahn der eingangs beschriebenen Art dahingehend zu verbessern, daß bei geringem Abrieb des Treibriemens und gleichzeitig kostengünstiger Herstellung und Montage des Stützelementes auch eine Eignung des Antriebssystems für die variable Benutzung in verschiedenen Transportsystemen gegeben ist.

Erfindungsgemäß wird dies dadurch erreicht, daß die frei drehbaren Rollen in einer oder mehreren nacheinander angeordneten U-förmigen Lagerleisten gelagert sind, wobei in den freien Enden der senkrechten U-Schenkel jeder Lagerleiste randoffene Ausnehmungen zur Aufnahme der Enden der Drehachse ausgebildet sind, wobei jede Lagerleiste in einer sich in Rollenbahn-Längsrichtung horizontal erstreckenden U-förmigen Tragschiene gelagert ist, und das Obertrum des Riemens oberhalb der Tragschiene und das Untertrum innerhalb der Tragschiene verläuft.

Dadurch, daß erfindungsgemäß die Rollen in einer U-förmigen, mit randoffenen Ausnehmungen versehenen Lagerleiste gelagert sind, können die Lagerrollen in beliebigem Abstand zu-einander in der Lagerleiste montiert werden. Hierbei wird die Lagerleiste ihrerseits in eine Tragschiene eingesetzt, die unterhalb der Förderrollen verläuft. Somit ergibt sich eine große Anpassungsmöglichkeit der Anordnung der zwischen den Förderrollen angeordneten, als Stützelemente dienenden Rollen an die unterschiedlichen, in der Praxis auftretenden fördertechnischen Erfordernisse. Da am Obertrum des Riemens im wesentlichen Rollreibung auftritt, ist der Verschleiß des Treibriemens im Vergleich mit einer Ausführung mit einem starren Gleitstützteil bedeutend verringert. Die erfindungsgemäße Rolle kann mit geringen Kosten einfach im Spritzgußverfahren hergestellt werden.

Vorteilhafte Ausführungen der Erfindung sind in den Unteransprüchen enthalten. Anhand der in den beiliegenden Zeichnungen dargestellten Ausführungsbeispiele wird die Erfindung näher erläutert. Es zeigen:

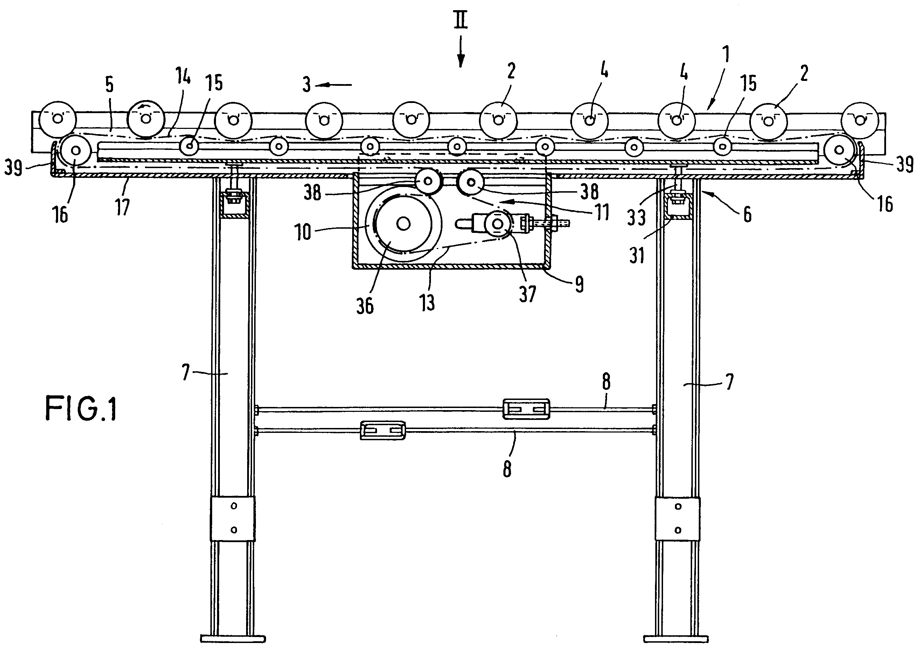

- Fig. 1: eine Seitenansicht, zum Teil geschnitten, einer erfindungsgemäßen Rollenbahn,

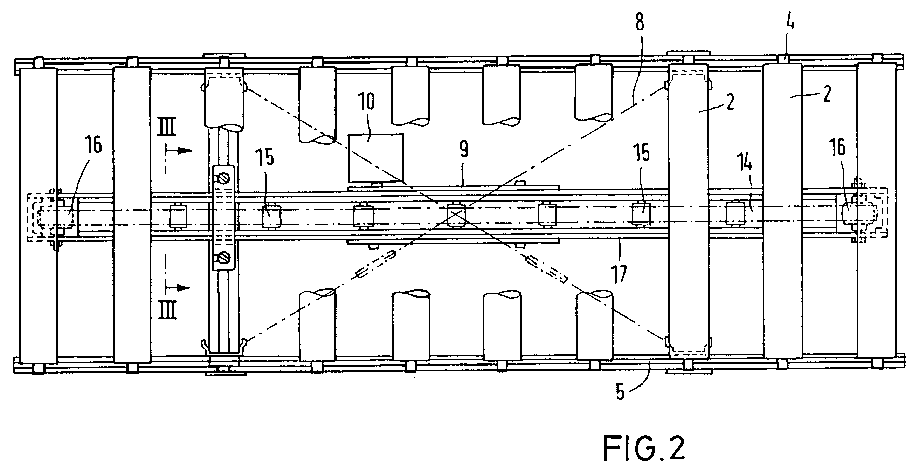

- Fig. 2: eine Ansicht gemäß dem Pfeil II in Fig. 1,

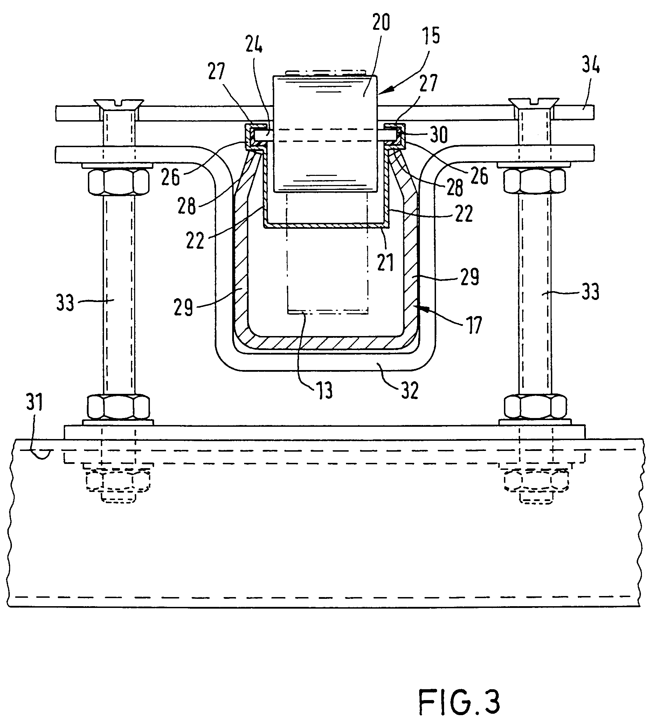

- Fig. 3: einen Schnitt entlang der Schnittlinie III-III in Fig. 2,

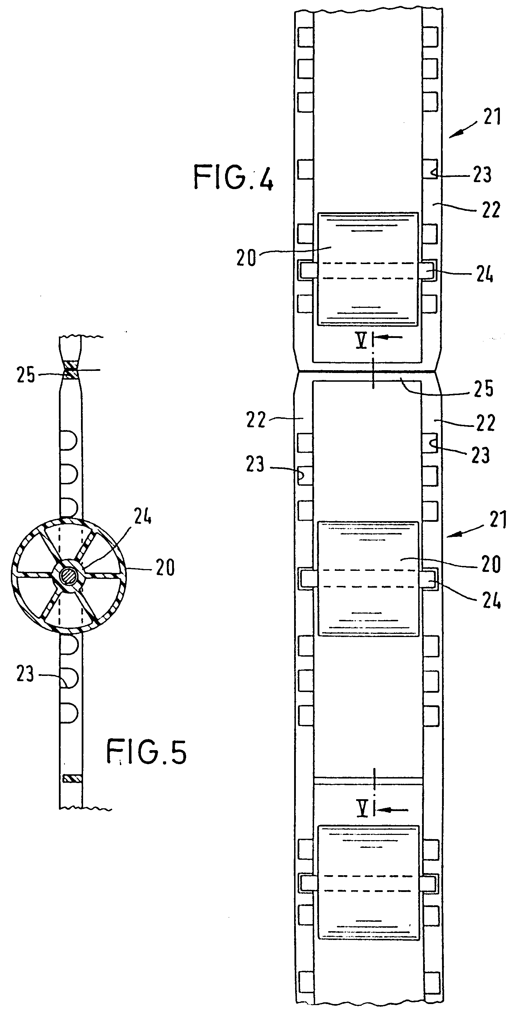

- Fig. 4: eine Aufsicht auf eine erfindungsgemäße Lagerleiste,
- Fig. 5: einen Teilschnitt entlang der Schnittlinie V-V in Fig. 4 im oberen Bereich der Lagerleiste.

Eine erfindungsgemäße Rollenbahn 1 weist eine Vielzahl von Förderrollen 2 auf, die um horizontale, sich quer zur Rollenbahn-Längsrichtung bzw. zur Förderrichtung 3 erstreckende Achsen 4 drehbar gelagert sind. Hierbei sind die Förderrollen 2 in Seitenprofilen 5 des Rollenbahngestells 6 endseitig drehbar gelagert, wie dies beispielsweise aus der deutschen Patentanmeldung P 41 33 808 bekannt ist. Zweckmäßigerweise sind die Seitenprofile 5 gemäß der Ausgestaltung des Gegenstandes der vorstehenden Patentanmeldung ausgebildet. Das Rollenbahngestell 6 weist vier senkrechte Standbeine 7 auf, die teleskopierbar und mittels Klemmteilen in der jeweiligen Verstellänge verstellbar sind. Die jeweils diagonal gegenüberliegenden Standbeine 7 sind mit einer längenverstellbaren Zugstange 8 verbunden, wodurch ein Spannkreuz gebildet wird, so daß eine genaue rechtwinklige Ausrichtung der Tragrollen bzw. Förderrollen 2 zur Transportrichtung 3 möglich ist. Unterhalb der Förderrollen 2 ist eine Antriebseinheit 9 angeordnet. Diese Antriebseinheit 9 umfaßt einen Elektromotor 10, der mit einem Riemenantrieb 11 verbunden ist, dessen die Förderrollen 2 antreibender Flachgurt-Riemen 13 in Rollenbahn-Längsrichtung so umlaufend angeordnet ist, daß sein Obertrum 14 die Unterseiten der Förderrollen 2 berührt. Dabei erstreckt sich das Obertrum 14 im wesentlichen tangential zu den Rollen 2, wobei es vorzugsweise zwischen jedem Rollenpaar nach oben über Stützelemente 15 laufend um ein Einziehungsmaß zwischen die Rollenpaare eingezogen geführt ist, um den Umschlingungswinkel des Obertrums 14 an den Förderrollen 2 zu vergrößern, wodurch eine größere Antriebskraft übertragen werden kann. Zwischen dem ersten und letzten Rollenpaar ist der Riemen 13 um Umlenkrollen 16 so umgelenkt, daß auch die erste und letzte Förderrolle jeweils berührt werden. Die Umlenkrollen 16 sind innerhalb des Rollbahngestells 6 herausnehmbar gelagert. Die Stützelemente 15 und die Umlenkrollen 16 sind in einer sich in Rollenbahn-Längsrichtung horizontal erstreckenden Tragschiene 17 gelagert, die mit der Antriebseinheit 9 verbunden ist, so daß die Tragschiene 17 und die Antriebseinheit 9 eine Montageeinheit bilden, wodurch auch Rollenbahnen nachträglich mit diesem Rollenbahnantrieb ausgerüstet werden können. Das Obertrum 14 des Riemens 13 verläuft oberhalb der Tragschiene 17, so daß der Riemen 13 durch die Umlenkrollen 16 so umgelenkt ist, daß sein Untertrum 18 innerhalb der Tragschiene 17 verläuft. Der Treibriemen 13 ist vorzugsweise als Geweberiemen ausgebildet, so daß er praktisch keiner Längung unterliegt. Vorzugsweise ist er einseitig gummiert, so daß ein Antriebsschlupf in der Antriebseinheit vermieden wird. Ist die Rollenbahn nicht als Staubahn vorgesehen, so ist eine beidseitige Gummierung des Treibriemens 13 vorteilhaft.

Die Tragschiene 17 ist als U-Profil ausgebildet, wobei die offene Seite des U-Profils den Förderrollen 2 zugekehrt ist. Die Stützelemente 15 bestehen jeweils aus Rollen 20, die in einer U-förmigen Lagerleiste 21 freidrehbar gelagert und frei von Tragkräften sind. Hierzu sind in den freien Enden der U-Schenkel 22, die senkrecht zur Förderebene verlaufen, randoffene Ausnehmungen 23 ausgebildet, in denen die Rollen 20 endseitig mit ihrer Drehachse 24 gelagert sind. Die Drehachse 24 kann einstückig mit den Rollen 20 sein, sie kann aber ebenfalls als separates Teil insbesondere aus Metall kraftschlüssig mit der jeweiligen Rolle 20 verbunden sein. Die Rollen 20 sind vorteilhafterweise als Spritzgußteile aus Kunststoff ausgebildet, wobei eine leicht ballig verlaufende Oberfläche vorgesehen ist. Die Ausnehmungen 23 sind in den U-Schenkeln 22 in einer großen Anzahl hintereinanderliegend ausgebildet, so daß sich der Abstand der hintereinander gelagerten Rollen 20 praktisch beliebig variieren läßt und eine Anpassung an den Abstand der Förderrollen 2 möglich ist. Die Lagerleisten 21 sind in bestimmten Längenabschnitten vorgefertigt und an ihren Enden sind die Lagerleisten 21 jeweilig mit einer Abschlußwand 25 versehen. Die Lagerleisten 21 können somit hintereinander in die Tragschienen 17 eingelegt werden, so daß eine Anpassung an jede Tragschienenlänge möglich ist. Der Rand der Lagerleisten 21 im Bereich der U-Schenkel 22 ist als offenes U-Profil 26 ausgebildet, wobei die offenen Seiten der U-Profile 26 aufeinander zugerichtet sind. Hierbei sind die Ausnehmungen 23 jeweils in dem oberen Schenkel 27 des U-Profils 26 ausgebildet. Mit dem gegenüberliegenden, unteren Schenkel 28 liegen die Lagerleisten 21 auf dem freien Ende der senkrechten U-Schenkel 29 der Tragschiene 17 auf. Innerhalb der insbesondere aus Metall bestehenden Lagerleiste 21 kann im Bereich der U-Profile 26 ein Lagereinsatz 30 aus Kunststoff vorgesehen sein, der leistenförmig ausgebildet ist. Dieser Lagereinsatz 30 verläuft durch das U-Profil 26 hindurch und besitzt den Ausnehmungen 23 angepaßte Lagerausnehmungen für die Drehachse 24 der Rollen 20. Die Enden der U-Schenkel 29 der Tragschienen 17 sind unter einem spitzen Winkel nach innen aufeinanderzu abgebogen, so daß sich eine Verengung des Querschnitts des U-Profils der Tragschiene 17 ergibt. Der gegenseitige Innenabstand der U-Schenkel 29 der Tragschiene 17 ist etwas größer als die Breite des Treibriemens 13. Durch die aufeinanderzu abgebogenen Enden der U-Schenkel 29 sitzt die Lagerleiste 21 leicht klemmend innerhalb der Tragschiene 17.

Die Tragschiene 17 wird mittels von unten U-förmig umfassender Haltelaschen 32 an Querträgern 31 des Rollenbahngestells 6 höhenverstellbar über Schraubbolzen 33 befestigt, wobei die Tragschiene 17 an ihrer Oberseite von einer Halteleiste 34 übergriffen wird, die ebenfalls mit den Schraubbolzen 33 verbunden ist. Durch diese höhenverstellbare Lagerung der Tragschiene 17 im Rollenbahngestell 6 kann eine Anpassung der Lagerung der Rollen 20 in Abhängigkeit vom Durchmesser der Förderrolle 2 erfolgen.

Die Antriebseinheit 9 besteht aus einem Elektromotor 10, der eine Antriebsrolle 36 antreibt, und einen dieser horizontal gegenüberliegenden Spannrolle 37 sowie zwei oberhalb zwischen der Antriebsrolle 36 und der Spannrolle 37 angeordneten, einander horizontal gegenüberliegenden Umlenkrollen 38. Der Treibriemen 13 verläuft mit seinem Untertrum 18 über die Umlenkrollen 38 und die Antriebs- und Spannrolle 36 bzw. 37. Die Spannrolle 37 ist derart gelagert, daß ihr Abstand von der Antriebsrolle 36 veränderbar ist. Der Durchmesser der Antriebsrolle 36 ist zweckmäßigerweise größer als der der Spannrolle 37.

Die Tragschiene 17 ist an ihren jeweiligen Enden mittels einer Endkappe 39 verschlossen, die in die Tragschiene 17 lösbar eingesetzt ist. Diese Endkappe 39 dient als Berührungsschutz und gleichzeitig verhindert sie ein Abrutschen des Treibriemens an der Umlenkstelle.

Die vorliegende Erfindung zeichnet sich durch große Zuverlässigkeit und Wartungsfreiheit aus, wobei die erfindungsgemäße Konstruktion erlaubt, daß die Antriebseinheit zusammen mit den aus den Rollen bestehenden Stützelementen leicht montiert werden kann, so daß sich auch jederzeit eine Nachrüstbarkeit ergibt. Die erfindungsgemäße Rollenbahn ist für eine Transportgeschwindigkeit bis 60 m/min. geeignet sowie für eine Transportleistung von 100 kg pro 1 m Rollenbahn pro Antrieb.

## Patentansprüche

1. Rollenbahn mit einer Mehrzahl von Förderrollen (2), die in Rollenbahn-Längsrichtung hintereinander drehbar angeordnet und durch einen umlaufenden Riemen (13) antreibbar sind, dessen Antriebstrum (14) sich in Rollenbahn-Längsrichtung erstreckt und bei Anlage an der Mantelfläche der Förderrollen (2) stellenweise jeweils zwischen zwei einander benachbarten Förderrollen (2) zwecks Vergrößerung des Umschlingungswinkels um ein als frei drehbare Rolle (20) ausgebildetes Stützelement (15) verlaufend geführt ist,
**dadurch gekennzeichnet,** daß die frei drehbaren Rollen (20) in einer oder mehreren nacheinander angeordneten U-förmigen Lagerleisten (21) gelagert sind, wobei in den freien Enden der senkrechten U-Schenkel (22) jeder Lagerleiste (21) randoffene Ausnehmungen (23) zur Aufnahme der Enden der Drehachse (24) ausgebildet sind, wobei jede Lagerleiste (21) in einer sich in Rollenbahn-Längsrichtung horizontal erstreckenden U-förmigen Tragschiene (17) gelagert ist, und das Obertrum (14) des Riemens (13) oberhalb der Tragschiene (17) und das Untertrum (18) innerhalb der Tragschiene (17) verläuft.

2. Rollenbahn nach Anspruch 1,
**dadurch gekennzeichnet,** daß die frei drehbaren Rollen (20) aus Kunststoff, insbesondere als Kunststoffspritzgußteil, ausgebildet sind und eine aus Metall bestehende kraftschlüssig eingesetzte Drehachse (24) aufweisen.

3. Rollenbahn nach Anspruch 1 oder 2,
**dadurch gekennzeichnet,** daß eine Vielzahl von Ausnehmungen (23) in Längsrichtung der Lagerleiste (21) hintereinander ausgebildet sind.

4. Rollenbahn nach einem der Ansprüche 1 bis 3,
**dadurch gekennzeichnet,** daß die Lagerleisten (21) aus vorgefertigten Längen mit jeweils endseitig ausgebildeten Abschlußwänden (25) bestehen.

5. Rollenbahn nach einem der Ansprüche 1 bis 4,
**dadurch gekennzeichnet,** daß die Lagerleisten (21) im Bereich der U-Schenkel (22) als offenes U-Profil (26) ausgebildet sind, wobei die offenen Seiten des U-Profils (26) aufeinander zu gerichtet sind und die Ausnehmungen (23) jeweils im oberen U-Schenkel (27) des U-Profils (26) ausgebildet sind.

6. Rollenbahn nach Anspruch 5,
**dadurch gekennzeichnet,** daß die Lagerleisten (21) mit dem dem oberen U-Schenkel (27) gegenüberliegenden unteren U-Schenkel (28) auf den freien Enden der senkrechten U-Schenkel (29) der Tragschiene (17) aufliegen.

7. Rollenbahn nach einem der Ansprüche 1 bis 6,
**dadurch gekennzeichnet,** daß in dem U-Profil (26) jeweils ein leistenförmiger Lagereinsatz (30), insbesondere aus Kunststoff, angeordnet ist, in dem den Ausnehmungen (23) angepaßte Lagerausnehmungen für die Drehachse (24) vorhanden sind.

8. Rollenbahn nach einem der Ansprüche 1 bis 7,
**dadurch gekennzeichnet,** daß die U-Schenkel (29) der Tragschiene (17) unter einem spitzen Winkel nach innen auf einander zu abgebogen sind, so daß sich eine Verengung des Querschnitts des U-Profils (26) der Tragschiene (17) ergibt.

9. Rollenbahn nach einem der Ansprüche 1 bis 8,
**dadurch gekennzeichnet,** daß die Tragschiene (17) mittels sie von unten umgreifender U-förmiger Haltelaschen (32) an Querträgern (31) des Rollenbahngestells mittels Schraubbolzen (33) höhenverstellbar befestigt ist, wobei die Tragschiene (17) an ihrer Oberseite von einer Halteleiste (34) übergriffen wird, die jeweils mit den Schraubbolzen (33) schraubgemäß verbunden ist.

10. Rollenbahn nach einem der Ansprüche 1 bis 9,
**dadurch gekennzeichnet,** daß die Tragschiene (17) jeweils endseitig mit einer Endkappe (39) verschlossen ist, wobei die Endkappe (39) innerhalb der Tragschiene (17) lösbar befestigt ist.

11. Rollenbahn nach einem der Ansprüche 1 bis 10,
**dadurch gekennzeichnet,** daß das Rollenbahngestell (6) vier Tragfüße (7) aufweist, die diagonal mit längsverstellbaren Zugstangen (8) verbunden sind.

## Claims

1. A roller conveyor having a plurality of transport rollers (2) which are arranged rotatably one behind another in the longitudinal direction of the roller conveyor and may be driven by a revolving belt (13) whereof the drive side (14) extends in the longitudinal direction of the roller conveyor and, when bearing against the outer surface of the transport rollers (2), in certain positions, in each case between two mutually adjacent transport rollers (2), is guided such that it runs round a supporting element (15) constructed as a freely rotatable roller (20), for the purpose of increasing the angle of contact,
characterized in that the freely rotatable rollers (20) are mounted in one or more U-shaped bearing strips (21), arranged one after another, there being made in the free ends of the perpendicular U-limb (22) of each bearing strip (21) recesses (23), which are open at the edge, for receiving the ends of the rotational spindle (24), each bearing strip (21) being mounted in a U-shaped support rail (17) extending horizontally in the longitudinal direction of the roller conveyor, and the upper side (14) of the belt (13) runs above the support rail (17) and the lower side (18) runs within the support rail (17).

2. A roller conveyor according to Claim 1,
characterized in that the freely rotatable rollers (20) are constructed from plastics material, in particular as a plastics injection-moulded part, and have a rotational spindle (24) of metal which is inserted with force fit.

3. A roller conveyor according to claim 1 or 2,
characterized in that a plurality of recesses (23) are constructed one behind another in the longitudinal direction of the bearing strip (21).

4. A roller conveyor according to one of Claims 1 to 3,
characterized in that the bearing strips (21) comprise prefabricated lengths having terminating walls (25) constructed at each end.

5. A roller conveyor according to one of Claims 1 to 4,
characterized in that the bearing strips (21) are constructed in the region of the U-limbs (22) as an open U-shaped profile (26), the open sides of the U-shaped profile (26) being directed towards one another, and the recesses (23) being constructed in each case in the upper U-limb (27) of the U-shaped profile (26).

6. A roller conveyor according to Claim 5,
characterized in that the bearing strips (21) lie with the lower U-limb (28), opposite the upper U-limb (27), on the free ends of the vertical U-limbs (29) of the support rail (17).

7. A roller conveyor according to one of Claims 1 to 6,
characterized in that there is arranged in the U-shaped profile (26) in each case a strip-shaped bearing insert (30), in particular of plastics material, in which there are provided bearing recesses for the rotational spindle (24), which are adapted to the recesses (23).

8. A roller conveyor according to one of claims 1 to 7,
characterized in that the U-limbs (29) of the support rail (17) are bent off inwardly towards one another at an acute angle, so that there is produced a narrowing of the cross-section of the U-shaped profile (26) of the support rail (17).

9. A roller conveyor according to one of claims 1 to 8,
characterized in that, by means of U-shaped holding clips (32) reaching round the support rail (17) from below, screw bolts (33) are used to secure the support rail (17) vertically adjustably to transverse supports (31) of the roller-conveyor frame, the support rail (17) being overlapped at its upper side by a holding strip (34) which is connected in each case to the screw bolts (33) in screwed connection.

10. A roller conveyor according to one of claims 1 to 9,
characterized in that the support rail (17) is closed at each end by an end cap (39), the end cap (39) being detachably secured within the support rail (17).

11. A roller conveyor according to one of Claims 1 to 10,
characterized in that the roller-conveyor frame (6) has four supporting feet (7) which are connected diagonally to longitudinally adjustable tension rods (8).

## Revendications

1. Chemin à rouleaux comportant une pluralité de rouleaux de transport (2) disposés successivement de manière rotative dans la direction longitudinale du chemin à rouleaux, et pouvant être entraînés par une courroie tournante (13) dont le câble d'entraînement (14) s'étend dans la direction longitudinale du chemin à rouleaux, et qui, lorsqu'il est appliqué sur l'enveloppe des rouleaux de transport (2), est guidé par endroits respectivement entre deux rouleaux de transport voisins (2) autour d'un élément de support (15) ayant la forme d'un rouleau (20) pouvant tourner librement, en vue d'agrandir l'angle de contact,
caractérisé en ce que les rouleaux (20) qui peuvent tourner librement sont montés dans une ou plusieurs barrettes de montage (21) en forme de U, disposées l'une derrière l'autre, des évidements (23) à bord ouvert étant prévus dans les extrémités libres des branches verticales du U (22) de chaque nervure de montage (21) pour accueillir les extrémités de l'axe de rotation (24), chaque barrette de montage (21) reposant dans un rail de support en forme de U (17) qui s'étend horizontalement dans la directionn longitudinale du chemin à rouleaux, le câble supérieur (14) de la courroie (13) s'étendant au-dessus du rail de support (17), et le câble inférieur (18), à l'intérieur du rail de support (17).

2. Chemin à rouleaux selon la revendication 1,
caractérisé en ce que les rouleaux (20) qui peuvent tourner librement sont réalisés en une matière synthétique, en particulier sous la forme d'éléments moulés par injection, et comportent un axe de rotation (24) en métal inséré par force.

3. Chemin à rouleaux selon la revendication 1 ou 2,
caractérisé en ce qu'une pluralité d'évidements (23) ont été pratiqués successivement dans la direction longitudinale de la barrette de montage (21).

4. Chemin à rouleaux selon l'une des revendications 1 à 3,
caractérisé en ce que les barrettes de montage (21) sont réalisées dans des pièces préfabriquées à longueur déterminée présentant des parois terminales (25) à leurs extrémités respectives.

5. Chemin à rouleaux selon l'une des revendications 1 à 4,
caractérisé en ce que les barrettes de montage (21) ont un profil en U ouvert (26) dans la région des branches du U (22), les faces ouvertes du profil en U (26) étant disposées en regard, et les évidements (23) étant pratiqués respectivement dans la branche supérieure (27) du profil en U (26).

6. Chemin à rouleaux selon la revendication 5,
caractérisé en ce que les barrettes de montage (21) reposent par la branche inférieure (28) disposée en regard de la branche supérieure (27) du U, sur les extrémités libres des branches verticales (29) du U du rail de support (17).

7. Chemin à rouleaux selon l'une des revendications 1 à 6,
caractérisé en ce que, dans le profil en U (26) est respectivement placé un insert en forme de nervure (30) réalisé en particulier dans une matière synthétique et dans laquelle sont prévus des évidements de montage de l'axe de rotation (24) adaptés aux évidements (23).

8. Chemin à rouleaux selon l'une des revendications 1 à 7,
caractérisé en ce que les branches (29) du U du rail de support (17) sont pliées vers l'intérieur l'une vers l'autre à angle aigu, ce qui entraîne une diminution de la section transversale du profil en U (26) du rail de support (17).

9. Chemin à rouleaux selon l'une des revendications 1 à 8,
caractérisé en ce que le rail de support (17) est fixé, au moyen de pattes de maintien (32) qui l'entourent depuis le bas, sur des supports transversaux (31) du bâti du chemin à rouleaux, à l'aide de boulons filetés (33), de manière à ce qu'on puisse régler sa hauteur, une barrette de maintien (34) s'étendant au-dessus de la face supérieure du rail de support (17), cette barrette étant respectivement reliée par vissage aux boulons filetés (33).

10. Chemin à rouleaux selon l'une des revendications 1 à 9,
caractérisé en ce que le rail de support (17) est respectivement fermé à ses extrémités par un capot terminal (39), ce capot (39) étant fixé de manière amovible dans le rail de support (17).

11. Chemin à rouleaux selon l'une des revendications 1 à 10,
caractérisé en ce que le bâti (6) du chemin à rouleaux présente quatre pieds de support (7) reliés diagonalement à des barres de traction (8) de longueur ajustable.
